# EUROPEAN PATENT SPECIFICATION

(11) **EP 2 828 333 B1**
(45) Date of publication and mention of the grant of the patent: **29.06.2016**
(21) Application number: 13710415.4
(22) Date of filing: 19.03.2013
(51) Int. Cl.: C08L 23/06, C08K 3/34

(54) **POLYOLEFIN FIBER**
POLYOLEFINFASER
FIBRE POLYOLÉFINIQUE

(30) Priority: 20.03.2012 EP 12160261
(43) Date of publication of application: 28.01.2015
(73) Proprietor: DSM IP Assets B.V., 6411 TE Heerlen (NL)
(72) Inventor: VLASBLOM, Martin, Pieter, NL-6100 AA Echt (NL); GIJSMAN, Pieter, NL-6100 AA Echt (NL); DE DANSCHUTTER, Evert, Florentinus, Florimondus, NL-6100 AA Echt (NL); MARISSEN, Roelof, NL-6100 AA Echt (NL)
(74) Representative: Zuideveld, Mihaela
(86) International application number: PCT/EP2013/055678
(87) International publication number: WO 2013/139784

(56) References cited:
- EP-A1- 0 091 547
- WO-A1-94/28064
- WO-A1-2006/040190
- WO-A1-2011/154415
- US-A- 5 613 987
- US-A1- 2010 233 479

## Description

### 1. Field of the Invention

The present invention relates to gel-spun polyolefin (PO) fibers having suitable stability and in particular a satisfactory UV stability; the use thereof in, for example, ropes, fishing lines and nets; and a process for making such fibers.

### 2. Description of the Related Art

Gel-spun PO fibers, in particular gel-spun high performance polyethylene (HPPE) fibers, are generally considered to be relatively stable in various environments and in particular when exposed to UV light. However, under certain circumstances the gel-spun PO fibers show a loss in tenacity, which may lead to a reduced life time. These circumstances can in particular occur when such fibers are used in ropes, fishing lines or fishing nets, architectural structures, or in cargo nets, straps and restraints used in shipping and aviation.

One manner of stabilizing gel-spun PO fibers is known from EP 0 343 863, wherein it is disclosed a process for producing a fiber by spinning a composition comprising an ultrahigh molecular weight polyolefin (UHMWPO), a diluent and a phenolic stabilizer in a specific ratio. Although not demonstrated with any experimental data, according to this document the gel-spun UHMWPO fibers manufactured thereof have excellent thermal stability during molding and long-term heat stability. In addition to the phenolic stabilizer, the composition used to spin said fibers may also include organic phosphite stabilizers, organic thioether stabilizers, hindered amine stabilizers and/or metal salts of higher fatty acids. The process disclosed in EP 0 343 863 for manufacturing said gel-spun UHMWPO fibers is a process wherein a solution of UHMWPO containing one or more of the above mentioned stabilizers and a suitable diluent for UHMWPO is spun through a spinneret to obtain UHMWPO filaments and subsequently subjecting said filaments to an extraction process wherein the diluent is extracted with the help of a second diluent.

It was however observed that although the composition used to manufacture the fibers contained a relatively high amount of stabilizers, e.g. of between 0.005 to 5 parts by weight based on 100 parts by weight of the total amount of UHMWPO and the diluent, after carrying out the process disclosed in EP 0 343 863, the amount of stabilizers left in the fibers was dramatically lowered. In most cases, it was observed that the amount of stabilizers left in the gel-spun UHMWPO fibers was so low that said fibers showed little stabilization, if any.

There is accordingly a need for gel-spun PO fibers that are optimally stabilized. The object of the invention may therefore be to provide such fibers and a process for making them, as well as products containing them.

### 3. Summary of the Invention

The present invention provides a gel-spun fiber comprising a polyolefin polymer forming a fiber body, wherein a stabilizer is present inside the fiber body, characterized in that the amount of said stabilizer is between 0.001 and 10 parts by weight based on 100 parts by weight of the amount of the polyolefin polymer forming said fiber body and wherein said stabilizer is carbon black.

To the inventors' knowledge, a gel-spun PO fiber such as the one according to the invention was never produced hitherto. Although known gel-spun PO fibers containing stabilizers were previously reported, the amount of stabilizers present inside thereof was too low to be effective, especially over an extended period of time. In particular the inventors noticed for the first time that in spite of using compositions comprising a large amount of stabilizers, little of said amount remains in the fibers at the end of the manufacturing process.

It has also been surprisingly discovered that incorporation of carbon black in the fiber body is made effective by the present invention. Moreover, the carbon black optimally protects the fiber against degradation, in particular UV-light degradation, while having an acceptable influence on the mechanical properties, e.g. tensile strength, thereof.

Within the context of the present invention, fibers are understood to mean elongated bodies of indefinite length and with length dimension much greater than their transversal dimensions, e.g. width and thickness. The term fiber may also include a monofilament, a ribbon, a strip or a tape and can have regular or irregular cross-section. The fibers may have continuous lengths, known in the art as filaments, or discontinuous lengths, known in the art as staple fibers. A yarn according to the present invention is an elongated body comprising a plurality of fibers.

By a gel-spun fiber is herein understood a fiber manufactured by spinning a solution comprising a polymer and a solvent for said polymer. The spinning of the solution may be effected by extruding said solution through a spinneret containing one or more spinning apertures. Unless otherwise indicated, the terms "fiber" and "gel-spun fiber" are used interchangeably to describe the present invention. Particularly preferred are gel-spun fibers, which are spun from a solution containing the polyolefin and a solvent for polyolefin which can be extracted from the fiber by evaporation, e.g. naphthenes such as decaline, tetralin or methylcyclohexane. It was observed that for such fibers a more optimal incorporation of the stabilizers is achieved.

Preferably, the gel-spun fibers of the invention are high performance gel-spun fibers, i.e. fibers with a tenacity of at least 1.5 N/tex, preferably at least 2.0 N/tex, more preferably at least 2.5 N/tex or even at least 3.0 N/tex. There is no reason for an upper limit of the tenacity of the fibers, but fibers typically having a tenacity of at most about 5 to 6 N/tex may be manufactured. Generally such high-strength gel-spun fibers also have a high tensile modulus, e.g. at least 50 N/tex, preferably at least 75 N/tex, more preferably 100 N/tex, most preferably at least 125 N/tex. Tensile strength, also simply referred to as strength, tenacity and modulus of fibers can be determined by known methods, as those based on ASTM D885M.

A yarn according to the invention preferably has a titer of at least 5 dtex, more preferably at least 10 dtex. For practical reasons, the titer of the yarns of the invention are at most several thousand dtex, preferably at most 2500 dtex, more preferably at most 2000 dtex. Yarns containing a plurality of fibers according to the invention preferably have a titer per fiber in the 0.1 - 50 dtex range, preferably 0.5-20 dtex. The titer of a yarn may also vary widely, for example from 20 to several thousand dtex, but is preferably in the range of 30-4000 dtex, more preferably 40-3000 dtex.

It is preferred that the PO used in accordance with the present invention is polypropylene or polyethylene, more preferably ultrahigh molecular weight polyethylene (UHMWPE). By UHMWPE is herein understood a polyethylene having an intrinsic viscosity (IV) as measured on solution in decalin at 135°C, of at least 5 dl/g. Preferably, the IV of the UHMWPE is at least 10 dl/g, more preferably at least 15 dl/g, most preferably at least 21 dl/g. Preferably, the IV is at most 40 dl/g, more preferably at most 30 dl/g, even more preferably at most 25 dl/g.

According to the invention, carbon black is present inside the fiber body. Preferably, the amount of carbon black is at least 0.01, more preferably at least 0.05, even more preferably at least 0.1 parts by weight based on 100 parts by weight of the amount of the polyolefin polymer forming the fiber body. Preferably, said amount of carbon black is at most 10, more preferably at most 8, even more preferably at most 6, yet even more preferably at most 5, most preferably at most 3 parts by weight based on 100 parts by weight of the amount of the polyolefin polymer forming the fiber body. In a preferred embodiment, the amount of carbon black is between 0.01 and 5 parts by weight, more preferably 0.05 and 1 parts by weight based on 100 parts by weight of the amount of the polyolefin polymer forming the fiber body.

By carbon black is herein understood a composition comprising at least 90 wt% of carbon, more preferably at lest 95 wt%, most preferably at least 98 wt%. Such compositions are commercially available and are usually produced by the combustion in an oxygen-reduced atmosphere of petroleum products, e.g. gaseous or liquid hydrocarbons. The composition is usually in a form of particles, most often in the form of colloidal particles. The remaining wt% of the composition is usually constituted by various metals, e.g. Antimony, Arsenic, Barium, Cadmium, Chromium, Lead, mercury, Nickel, Selenium, Zink and the like. The carbon black has preferably an average particle size as measured by ASTM D3849-07(2011) of at least 5 nm, more preferably at least 10 nm, most preferably at least 15 nm. Said average particle size is preferably at most 100 nm, most preferably at most 75 nm, most preferably at most 50 nm. The carbon-black has preferably a BET-surface as measured by ASTM D6556-10 of at least 50 m²/g; more preferably at least 80 m²/g; even more preferably at least 105 m²/g; most preferably at least 120 m²/g. Said BET-surface is preferably at most 500 m²/g, more preferably at most 350 m²/g, most preferably at most 250 m²/g.

The present invention also relates to a gel-spinning process for manufacturing the fibers of the invention, said process comprising at least the steps of (a) preparing a solution comprising a PO, a carbon black and a suitable solvent for PO; (b) extruding said solution through a spinneret to obtain a gel fiber containing said PO, said carbon black and said solvent for PO; and (c) extracting by evaporation the solvent from the gel fiber to obtain a solid fiber. Preferably, the PO is UHMWPE and the solvent is decalin or a derivative thereof. In a preferred embodiment, step (a) comprises steps (a1) of providing a mixture containing a first PO and carbon black; and step (a2) preparing a solution comprising a second PO, the mixture of step (a1) and a suitable solvent for both the first and second PO, wherein the first PO has a lower molecular weight than the second PO. Preferably the amount of carbon black in the mixture of step (a1) is between 10 wt% and 95 wt% based on the total weight of the mixture, more preferably said amount is between 25 wt% and 80 wt%, most preferably between 35 wt% and 65 wt%. Preferably, the amount of carbon black in the solution of step (a) or (a2) is at least 1 wt% with respect to the total weight of the solution, more preferably at least 2 wt%, most preferably at least 3 wt%. Preferably, the first PO in the mixture of step (a1) is a low molecular weight PO, i.e. at most 50% of the molecular weight of the second PO used in step (a) or (a2), more preferably at most 40%, most preferably at most 30%. Preferably said first PO is a low molecular weight polyethylene, more preferably a low density polyethylene (LDPE); said second PO is UHMWPE and the solvent is decaline. The gel-spinning process may also optionally contain a drawing step wherein the gel fiber and/or the solid fiber are drawn with a certain draw ratio. Gel spinning processes are known in the art and are disclosed for example in WO 2005/066400; WO 2005/066401; WO 2009/043598; WO 2009/043597; WO 2008/131925; WO 2009/124762; EP 0205960 A, EP 0213208 A1, US 4413110, GB 2042414 A, GB-A-2051667, EP 0200547 B1, EP 0472114 B1, WO 2001/73173 A1, EP 1,699,954 and in *"*Advanced Fibre Spinning Technology", Ed. T. Nakajima, Woodhead Publ. Ltd (1994), ISBN 185573 182 7, these publications and the references cited therein being included herein by reference.

In a further aspect, the invention relates to a fiber comprising a polymer forming a fiber body, wherein a carbon black is present inside the fiber body, characterized in that said fiber has a tensile strength retention of at least 50% after UV light exposure for at least 2000 hours in accordance with the method described in ISO 4982-2. The specific conditions of ISO 4982-2 are detailed hereinafter in the METHODS OF MEASUREMENT section. Preferably said fiber has a strength retention of at least 60%, more preferably of at least 80%, even more preferably of at least 100%, most preferably at least 105%. Preferably the fiber of the invention is a fully drawn fiber. It was surprisingly found that for the fibers of the invention and in particular for the fully drawn fibers of the invention, the tensile strength thereof shows an increase after said fiber is treated or exposed with UV light. Therefore, although the term strength retention usually implies that the tensile strength of a fiber after UV light exposure is lower than the initial tensile strength of said fiber, i.e. the strength before UV exposure, in accordance with the present invention it is not excluded that the tensile strength after said UV light exposure is higher than said initial tensile strength. Preferably the strength retention is after an exposure of at least 2500 ours, more preferably of at least 3000 hours. Preferably, the amount of carbon black is between 0.001 and 10 parts by weight based on 100 parts by weight of the amount of the polymer forming said fiber body. Preferably, said polymer is polyolefin, more preferably UHMWPE. Preferably said fiber is a gel-spun fiber, more preferably a gel-spun polyolefin fiber, most preferably a gel-spun UHMWPE fiber.

The invention also relates to a method of increasing the strength of a fiber, comprising the steps of:
i. providing a fully drawn polymeric fiber comprising carbon black; and
ii. exposing said fiber to UV light for at least 2000 hours in accordance with the method described in ISO 4982-2.

Preferred embodiments of the fiber used in the method of the invention are those presented hereinabove in relation to the fiber of the invention.

The invention also relates to a fiber comprising a fiber body, said fiber body being manufactured from an ultrahigh molecular weight polyethylene (UHMWPE) having an initial intrinsic viscosity (IV) of at least 5 dl/g, said fiber body further comprising carbon black, wherein after exposing said fiber to UV light for at least 1400 hours in accordance with the method described in ISO 4982-2, the IV of the UHMWPE forming said fiber body is at least 60% of the initial IV of the UHMWPE used to manufacture said fiber body.. The specific conditions of ISO 4982-2 are detailed hereinafter in the METHODS OF MEASUREMENT section. Preferably, the IV of the UHMWPE forming said fiber body is at least 75% of the initial IV of the UHMWPE used to manufacture said fiber, more preferably at least 85%, most preferably at least 95%. Preferably, the IV of the UHMWPE forming said fiber body is at least 7.5 dl/g, more preferably at least 10 dl/g, even more preferably at least 13 dl/g, most preferably at least 16 dl/g. Preferably, the amount of carbon black is between 0.001 and 10 parts by weight based on 100 parts by weight of the amount of the UHMWPE forming said fiber body.

The fibers of the invention containing the carbon black can be used in any application where such fibers are normally applied. In particular the fibers can be used in architectural textiles, ropes, fishing lines and fishing nets, and cargo nets, straps, and restraints in shipping and aviation, gloves and other protective apparel. Thus in one respect the invention relates to an article, preferably a rope, a glove, a protective apparel, a fishing line, a net, or a medical device comprising the fibers of the invention.

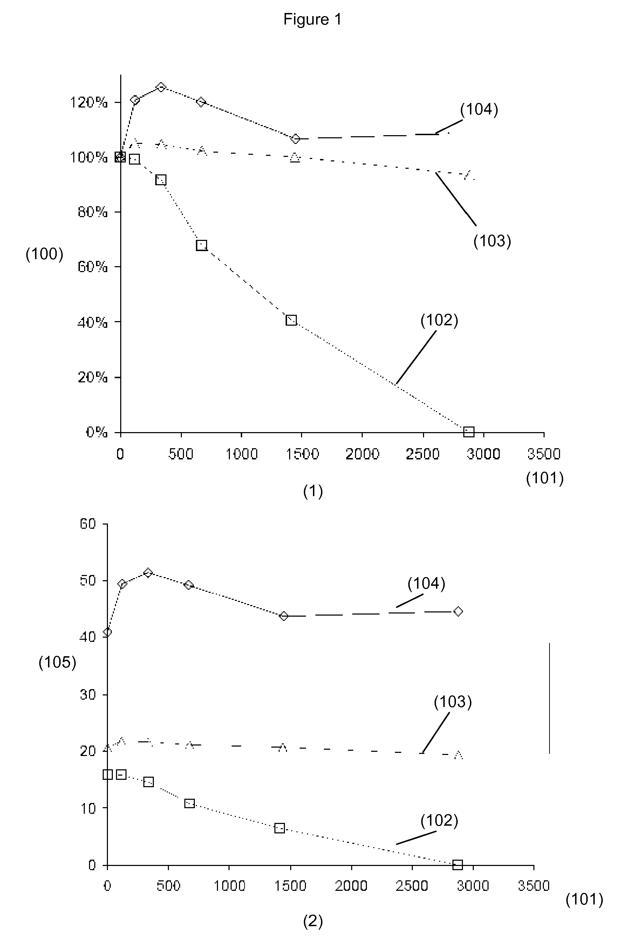

Figure 1 (1) shows the variation in tensile strength retention (in %) of a fiber exposed to UV light for a certain period of time expressed in hours; Figure 1 (2) shows the variation of the tensile strength (in cN/dtex) of said fiber for the same period of time.

The invention will be further explained in detail with the help of the following examples and comparative experiments without being however limited thereto.

### METHODS OF MEASUREMENT:

- IV: the Intrinsic Viscosity is determined according to method PTC-179 (Hercules Inc. Rev. Apr. 29, 1982) at 135 °C in decalin, the dissolution time being 16 hours, with BHT (Butylated Hydroxy Toluene) as anti-oxidant in an amount of 2 g/l solution, by extrapolating the viscosity as measured at different concentrations to zero concentration;
- Dtex: fibers' titer (dtex) was measured by weighing 100 meters of fiber. The dtex of the fiber was calculated by dividing the weight in milligrams to 10;
- Tensile properties of fibers: tensile strength (or strength) and tensile modulus (or modulus) are defined and determined on multifilament yarns as specified in ASTM D885M, using a nominal gauge length of the fibre of 500 mm, a crosshead speed of 50 %/min and Instron 2714 clamps, of type "Fibre Grip D5618C". On the basis of the measured stress-strain curve the modulus is determined as the gradient between 0.3 and 1 % strain. For calculation of the modulus and strength, the tensile forces measured are divided by the titre, as determined by weighing 10 metres of fibre; values in GPa are calculated assuming a density of 0.97 g/cm³.
- Tensile properties of fibers having a tape-like shape: tensile strength, tensile modulus and elongation at break are defined and determined at 25 °C on tapes of a width of 2 mm as specified in ASTM D882, using a nominal gauge length of the tape of 440 mm, a crosshead speed of 50 mm/min.
- Elongational stress (ES) of an UHMWPE is measured according to ISO 11542-2A
- The tensile strength retention was determined by measuring the tensile strength of the fiber as described hereinabove, after exposing the fiber for a set number of hours to UV light in accordance with the ISO 4982-2 method.
- Thermal Analysis (TGA) of fiber samples was conducted in duplicate starting at 30°C for 10 minutes, heat to 800°C with a heating rate of 20°C/min under nitrogen, switch at 800°C to oxygen and heat to 925°C with heating rate of 20°C/min under oxygen. The concentration of carbon black in the fiber in parts by weight is calculated by dividing the mass loss of the combustion under oxygen at around 800°C by the mass loss of the sample up to the switch to oxygen.
- The following specific conditions were used with the method described by ISO 4982-2:for UV exposure: a Xenon lamp of 6500 W was used with borosilicate filters, having an intensity of 0.35 W/m² at 340 nm; a rain cycle consisting of a 108 minutes dry period and a 12 minutes wet period, wherein the dry period had a humidity of the environment of about 50% and the wet period had a humidity of about 100%; and a back panel temperature of about 63°C.

### EXAMPLES AND COMPARATIVE EXPERIMENT

A number of yarns were prepared by gel spinning fibers from a solution containing carbon black (Printex®F80, Degussa with a BET of 220 g/m² and a primary particle size of 16 nm), UHMWPE and decalin as solvent for UHMWPE. The decalin was subsequently extracted by evaporation. The amount of UHMWPE in solution was about 10 wt% based on the total weight of the solution. Each of the yarns was drawn to a linear density of about 110 dtex. The concentration of carbon black in the solution was varied between 0.1 and 10wt% with respect to the amount of UHMWPE. A number of yarns were also spun from the above mentioned solution without the carbon black.

A partially drawn yarn and a fully drawn yarn prepared from a solution containing 3 wt% of Printex® F80 based on the amount of UHMWPE where analyzed for their carbon black content by TGA. The samples contained 2.2 and 2.4 parts by weight with respect to the amount of UHMWPE in said fiber, respectively.

Typically, the amount of carbon black left in the fiber after the evaporation of decalin was between 0.001 and 10 parts by weight with respect to the amount of UHMWPE in said fiber.

Some of the yarns were tested for UV-resistance according to ISO4982-2 over a maximum of 120 days. It was determined that the retention of tensile strength for the sample containing no carbon black showed a linear decrease in strength after 700 hours, and total loss of strength at around 3000 hours.

In contrast, the samples containing carbon black showed much better long term performance. A sample containing carbon black which was mildly drawn showed a tensile strength retention of about 95% after 3000 hours.

A surprising behavior however was observed for samples containing carbon black and which were fully drawn. Such samples showed an increase of their tensile strength after being treated with UV light according to the method described herein above, their tensile strength after about 3000 hours being 9% higher when compared to the initial tensile strength.

With reference to Figure 1 (1) it can be observed that the strength retention (100) after certain hours of UV exposure (101) of a fiber sample (102) containing no carbon black, is much lower when compared to that of a fiber sample (103) which was mildly drawn and containing 2.2 parts by weight of carbon black as well as to that of a fiber sample (104) which was fully drawn and containing 2.4 parts by weight of carbon black. In particular after 3000 hours, it can be seen that the tensile strength of the fiber sample (102) is practically zero, while the tensile strength of the fiber sample (103) is about 95% of its tensile strength measured at zero hours. Surprisingly it can be seen that the tensile strength of the fiber sample (104) is increased with about 9% after 3000 hours exposure. The same behavior can be observed when the variation of the fiber sample's strength (105) is analyzed in relation to the UV exposure (101) as shown in Figure 1(2).

By fully drawn fiber is herein understood a fiber drawn to at least 75%, more preferably at least 85%, most preferably to at least 95% of a maximum draw ratio, wherein the maximum draw ratio is the ratio above which the fiber would break. The maximum draw ratio can be determined by routine experimentation by the skilled person, for example by drawing said fiber at increasing drawing ratios under the same drawing conditions, until the fiber breaks. A mildly drawn fiber can be for example a fiber drawn to at most 50%, moreover to at most 30% of the maximum draw ratio.

Several samples were tested for relative intrinsic viscosity at 1400 hours of weathering. The results are provided in table 2 below.

**Table 2:**

| Example | Intrinsic Viscosity at 0hrs | Intrinsic Viscosity at 1400hrs |
|---|---|---|
| with carbon black | 16.9 | 16.3 |
| no carbon black | | 9.4 |

## Claims

1. A gel-spun fiber comprising a polyolefin polymer forming a fiber body, wherein a stabilizer is present inside the fiber body, **characterized in that** the amount of said stabilizer is between 0.001 and 10 parts by weight based on 100 parts by weight of the amount of the polyolefin polymer forming said fiber body and wherein said stabilizer is carbon black.

2. The fiber of claim 1 where said fiber is a monofilament, a ribbon, a strip or a tape.

3. The fiber of any one of the preceding claims having a tenacity of at least 1.5 N/tex as measured by ASTM D885M.

4. The fiber of any one of the preceding claims having a tensile modulus of at least 50 N/tex as measured by ASTM D885M.

5. The fiber of any one of the preceding claims having a titer between 0.1 dtex and 50 dtex, more preferably between 0.5 dtex and 20 dtex.

6. The fiber of any one of the preceding claims wherein the polyolefin is polypropylene or polyethylene.

7. The fiber of any one of the preceding claims wherein the polyolefin is ultrahigh molecular weight polyethylene (UHMWPE).

8. The fiber of any one of the preceding claims wherein the amount of carbon black is at least 0.1 parts by weight based on 100 parts by weight of the amount of the polyolefin polymer forming the fiber body.

9. The fiber of any one of the preceding claims wherein the amount of carbon black is at most 3 parts by weight based on 100 parts by weight of the amount of the polyolefin polymer forming the fiber body.

10. The fiber of any one of the preceding claims wherein the average particle size of carbon black as measured by ASTM D3849-07(2011) is at least 5 nm.

11. The fiber of any one of the preceding claims wherein the carbon-black has a BET-surface as measured by ASTM D6556-10 of at least 50 m²/g.

12. A fiber comprising a polyolefin polymer forming a fiber body, wherein a carbon black is present inside the fiber body in an amount of between 0.001 and 10 parts by weight on 100 parts by weight of the amount of the polyolefin polymer forming said fiber body, **characterized in that** said fiber has a tensile strength retention of at least 50% after UV light exposure for at least 2000 hours in accordance with the method described in ISO 4982-2.

13. A fiber comprising a fiber body, said fiber body being manufactured from an ultrahigh molecular weight polyethylene (UHMWPE) having an initial intrinsic viscosity (IV) of at least 5 dl/g, said fiber body further comprising carbon black, wherein after exposing said fiber to UV light for at least 1400 hours in accordance with the method described in ISO 4982-2, the IV of the UHMWPE forming said fiber body is at least 60% of the initial IV of the UHMWPE used to manufacture said fiber body.

14. A method of increasing the strength of a fiber, comprising the steps of:
i. providing a fully drawn polyolefin fiber comprising carbon black present inside the fiber body in an amount of between 0.001 and 10 parts by weight on 100 parts by weight of the amount of the polyolefin polymer forming said fiber body; and
ii. exposing said fiber to UV light for at least 2000 hours in accordance with the method described in ISO 4982-2.

15. Architectural textiles, ropes, fishing lines and fishing nets, and cargo nets, straps, and restraints in shipping and aviation, gloves and protective apparel comprising the fiber of any one of the claims 1-12.

## Patentansprüche

1. Nach dem Gelspinnverfahren ersponnene Faser, umfassend ein einen Faserkörper bildendes Polyolefin, wobei im Faserkörper ein Stabilisator vorliegt, **dadurch gekennzeichnet, dass** der Stabilisator in einer auf 100 Gewichtsteile des den Faserkörper bildenden Polyolefins bezogenen Menge zwischen 0,01 und 10 Gewichtsteilen vorliegt, wobei es sich bei dem Stabilisator um Ruß handelt.

2. Faser nach Anspruch 1, bei der es sich um Monofilament, Band, Bändchen oder Streifen handelt.

3. Faser nach einem der vorhergehenden Ansprüche mit einer Feinheitsfestigkeit von mindestens 1,5 N/tex gemäß ASTM D885M.

4. Faser nach einem der vorhergehenden Ansprüche mit einem Zugmodul von mindestens 50 N/tex gemäß ASTM D885M.

5. Faser nach einem der vorhergehenden Ansprüche mit einem Titer zwischen 0,1 dtex und 50 dtex, besonders bevorzugt zwischen 0,5 dtex und 20 dtex.

6. Faser nach einem der vorhergehenden Ansprüche, bei der es sich bei dem Polyolefin um Polypropylen oder Polyethylen handelt.

7. Faser nach einem der vorhergehenden Ansprüche, bei der es sich bei dem Polyolefin um ultrahochmolekulares Polyethylen (UHMWPE) handelt.

8. Faser nach einem der vorhergehenden Ansprüche, bei der der Ruß in einer auf 100 Gewichtsteile des den Faserkörper bildenden Polyolefins bezogenen Menge von mindestens 0,1 Gewichtsteilen vorliegt.

9. Faser nach einem der vorhergehenden Ansprüche, bei der der Ruß in einer auf 100 Gewichtsteile des den Faserkörper bildenden Polyolefins bezogenen Menge von höchstens 3 Gewichtsteilen vorliegt.

10. Faser nach einem der vorhergehenden Ansprüche, bei der der Ruß über eine gemäß ASTM D3849-07(2011) gemessene mittlere Teilchengröße von mindestens 5 nm verfügt.

11. Faser nach einem der vorhergehenden Ansprüche, bei der der Ruß über eine nach dem BET-Verfahren gemäß ASTM D6556-10 gemessene Oberfläche von mindestens 50 m²/g verfügt.

12. Faser, umfassend ein einen Faserkörper bildendes Polyolefin, wobei im Faserkörper ein Ruß in einer auf 100 Gewichtsteile des den Faserkörper bildenden Polyolefins bezogenen Menge zwischen 0,001 und 10 Gewichtsteilen vorliegt, **dadurch gekennzeichnet, dass** der Faser nach mindestens 2000-stündigen UV-Lichteinwirkung gemäß ISO 4982-2 von ihrer Ausgangszugfestigkeit noch mindestens 50% verbleiben.

13. Faser, umfassend einen Faserkörper aus einem ultrahochmolekularen Polyethylen (UHMWPE) mit einer intrinsischen Viskosität IV von mindestens 5 dl/g im Ausgangszustand, wobei der Faserkörper ferner Ruß umfasst, wobei nach mindestens 1400-stündigen UV-Lichteinwirkung auf die Faser gemäß ISO 4982-2 der IV-Wert des den Faserkörper bildenden UHMWPE noch mindestens 60% des IV-Werts des zur Herstellung des Faserkörper eingesetzten UHMWPE im Ausgangszustand beträgt.

14. Verfahren zur Erhöhung der Festigkeit einer Faser, umfassend die Schritte:
i. Bereitstellung einer vollverstreckten Polyolefinfaser, umfassend Ruß im Faserkörper in einer Menge zwischen 0,001 und 10 Gewichtsteilen auf 100 Gewichtsteile des den Faserkörper bildenden Polyolefins und
ii. mindestens 2000-stündiger UV-Lichteinwirkung auf die Faser gemäß ISO 4982-2.

15. Die Faser gemäß einem der Ansprüche 1-12 umfassende Bautextilien, Seile, Angelschnüre und -netze, Frachtnetze, -gurte und -arretierungen in Schiff- und Luftfahrt, Handschuhe und Schutzkleidung.

## Revendications

1. Fibre filée à l'état de gel comprenant un polymère polyoléfinique formant un corps de fibre, dans laquelle un stabilisant est présent à l'intérieur du corps de fibre, **caractérisée en ce que** la quantité dudit stabilisant est comprise entre 0,001 et 10 parties en poids pour 100 parties en poids de la quantité du polymère polyoléfinique formant ledit corps de fibre et dans laquelle ledit stabilisant est du noir de carbone.

2. Fibre selon la revendication 1, ladite fibre étant un monofilament, un ruban, une bandelette ou une bande.

3. Fibre selon l'une quelconque des revendications précédentes ayant une ténacité, telle que mesurée selon la norme ASTM D885M, d'au moins 1,5 N/tex.

4. Fibre selon l'une quelconque des revendications précédentes ayant un module d'élasticité en traction, tel que mesuré selon la norme ASTM D885M, d'au moins 50 N/tex.

5. Fibre selon l'une quelconque des revendications précédentes ayant un titre compris entre 0,1 dtex et 50 dtex, de préférence encore entre 0,5 dtex et 20 dtex.

6. Fibre selon l'une quelconque des revendications précédentes dans laquelle la polyoléfine est du polypropylène ou du polyéthylène.

7. Fibre selon l'une quelconque des revendications précédentes dans laquelle la polyoléfine est du polyéthylène de masse moléculaire très élevée (UHMWPE).

8. Fibre selon l'une quelconque des revendications précédentes dans laquelle la quantité de noir de carbone est d'au moins 0,1 partie en poids pour 100 parties en poids de la quantité du polymère polyoléfinique formant le corps de fibre.

9. Fibre selon l'une quelconque des revendications précédentes dans laquelle la quantité de noir de carbone est d'au maximum 3 parties en poids pour 100 parties en poids de la quantité du polymère polyoléfinique formant le corps de fibre.

10. Fibre selon l'une quelconque des revendications précédentes dans laquelle la taille moyenne des particules de noir de carbone telle que mesurée selon la norme ASTM D3849-07(2011) est d'au moins 5 nm.

11. Fibre selon l'une quelconque des revendications précédentes dans laquelle le noir de carbone a une surface spécifique BET telle que mesurée selon la norme ASTM D6556-10 d'au moins 50 m²/g.

12. Fibre comprenant un polymère polyoléfinique formant un corps de fibre, dans laquelle un noir de carbone est présent à l'intérieur du corps de fibre en une quantité comprise entre 0,001 et 10 parties en poids pour 100 parties en poids de la quantité du polymère polyoléfinique formant ledit corps de fibre, **caractérisée en ce que** ladite fibre a une conservation de la résistance à la traction d'au moins 50 % après exposition à de la lumière UV pendant au moins 2000 heures conformément à la méthode décrite dans la norme ISO 4982-2.

13. Fibre comprenant un corps de fibre, ledit corps de fibre étant fabriqué à partir d'un polyéthylène de masse moléculaire très élevée (UHMWPE) ayant une viscosité intrinsèque initiale (VI) d'au moins 5 dl/g, ledit corps de fibre comprenant en outre du noir de carbone, la VI du UHMWPE formant ledit corps de fibre, après exposition de ladite fibre à de la lumière UV pendant au moins 1400 heures conformément à la méthode décrite dans la norme ISO 4982-2, étant d'au moins 60 % de la VI initiale du UHMWPE utilisé pour fabriquer ledit corps de fibre.

14. Procédé d'augmentation de la résistance d'une fibre, comprenant les étapes consistant à :
i. fournir une fibre de polyoléfine entièrement étirée comprenant du noir de carbone présent à l'intérieur du corps de fibre en une quantité comprise entre 0,001 et 10 parties en poids pour 100 parties en poids de la quantité du polymère polyoléfinique formant ledit corps de fibre ; et
ii. exposer ladite fibre à de la lumière UV pendant au moins 2000 heures conformément à la méthode décrite dans la norme ISO 4982-2.

15. Textiles architecturaux, cordes, lignes de pêche et filets de pêche et filets d'arrimage du fret, courroies et dispositifs de retenue pour le transport et l'aviation, gants et vêtements de protection comprenant la fibre selon l'une quelconque des revendications 1-12.
